# EUROPEAN PATENT APPLICATION

(11) **EP 4 692 001 A1**
(43) Date of publication of application: **11.02.2026**
(21) Application number: 24779979.4
(22) Date of filing: 22.03.2024
(51) Int. Cl.: C02F 1/44, B01D 69/02

(54) **CARBONATE IMMOBILIZATION DEVICE AND CARBONATE IMMOBILIZATION METHOD**

(30) Priority: 24.03.2023 JP 2023048995
(71) Applicant: Sumitomo Heavy Industries, Ltd., Tokyo 141-6025 (JP)
(72) Inventor: HIRATA Kazuhiro, Yokosuka-shi Kanagawa 237-8555 (JP)
(74) Representative: Louis Pöhlau Lohrentz
(86) International application number: PCT/JP2024/011318
(87) International publication number: WO 2024/203861

(57) **Abstract**

[Problem] An object of the present invention is to provide a carbonate immobilization device and a carbonate immobilization method that generate an alkaline-earth metal carbonate with less energy than concentration caused by heating and evaporating from treatment target water containing alkaline-earth metal ions.

[Solution] The carbonate immobilization device of the present invention generates an alkaline-earth metal carbonate by concentrating treatment target water containing alkaline-earth metal ions using a membrane having a magnesium chloride blocking rate of 1.0% or more and 99.0% or less.

By using the membrane having the magnesium chloride blocking rate of 1.0% or more and 99.0% or less, a part of the alkaline-earth metal carbonate generated when the treatment target water is concentrated passes through the membrane. From this, a decrease in a treatment target water treatment performance caused by adhesion of the carbonate, which is called scale, to a surface of the membrane can be suppressed, and carbon dioxide can be efficiently immobilized.

## Description

### Technical Field

The present invention relates to a device that concentrates treatment target water (for example, sea water) containing alkaline-earth metal ions to generate calcium carbonate and/or a magnesium carbonate and that immobilizes carbon dioxide, and a method for immobilizing the carbonates thereof.

### Background Art

In recent years, the problem of carbon dioxide is considered to be a major cause of global warming, and it is an urgent issue to suppress exhaustion of carbon dioxide into the environment worldwide. Thus, in order to reduce the amount of carbon dioxide in the atmosphere, it has been studied to immobilize carbon dioxide as a carbonate.

In general, PTL 1 describes that when sea water is evaporated, a calcium carbonate, which is a carbonate, precipitates.

### Citation List

### Patent Literature

[PTL 1] Japanese Unexamined Patent Publication No. 2006-070011

### Summary of Invention

### Technical Problem

As a method for generating a carbonate, as described in PTL 1, when a solution containing carbon dioxide and an alkaline-earth metal ion, such as sea water, is evaporated and concentrated by heating to obtain a carbonate, great energy for evaporating the solution is required. Thus, the method is difficult to adopt.

As another concentration means, there is means for concentrating a solution containing carbon dioxide and an alkaline-earth metal ion, such as sea water, by using a reverse osmosis membrane (RO membrane). By concentrating the sea water or the like using the RO membrane, an alkaline-earth metal carbonate can be obtained without requiring a large amount of energy such as heating and evaporating. However, the concentration method using the RO membrane has a problem in which the alkaline-earth metal carbonate adheres to the surface of the RO membrane as scale, and a treatment target water treatment performance deteriorates.

Therefore, an object of the present invention is to provide a carbonate immobilization device and a carbonate immobilization method that suppress a decrease in a treatment target water treatment performance by suppressing adhesion of an alkaline-earth metal carbonate as scale to a surface of a membrane as a carbonate immobilization device and a carbonate immobilization method that immobilize carbon dioxide using membrane filtration.

### Solution to Problem

As a result of intensive studies on the above problems, the present inventor has found that carbon dioxide can be immobilized by using a membrane having a magnesium chloride blocking rate of 1.0% or more and 99.0% or less to concentrate treatment target water containing an alkaline-earth metal ion (mainly a calcium ion) and to generate an alkaline-earth metal carbonate (a calcium carbonate and/or a magnesium carbonate) to complete the present invention.

That is, the present invention is the following carbonate immobilization device and the following carbonate immobilization method.

According to an aspect of the present invention, in order to solve the problem, there is provided a carbonate immobilization device that generates an alkaline-earth metal carbonate by concentrating treatment target water containing an alkaline-earth metal ion using a membrane having a magnesium chloride blocking rate of 1.0% or more and 99.0% or less.

With the carbonate immobilization device of the present invention, concentration using the semipermeable membrane is performed. From this, there is an effect in which the treatment target water can be concentrated with less energy compared to a case where the treatment target water is heated and evaporated to be concentrated, and carbon dioxide can be immobilized as the carbonate.

In addition, by using the membrane having the magnesium chloride blocking rate of 1.0% or more and 99.0% or less, a part of the alkaline-earth metal carbonate generated when the treatment target water is concentrated passes through the membrane. From this, a decrease in a treatment target water treatment performance caused by adhesion of the carbonate, which is called scale, to a surface of the membrane can be suppressed, and carbon dioxide can be efficiently immobilized.

In addition, as the aspect of the carbonate immobilization device of the present invention, the membrane has a sodium chloride blocking rate of 1.0% to 99.0%, and the treatment target water contains a sodium ion.

With the carbonate immobilization device, the carbon dioxide can be more efficiently immobilized even in a case where the treatment target water contains sodium ions.

In addition, as the aspect of the carbonate immobilization device of the present invention, a membrane having a magnesium chloride blocking rate of 95.0% or less is used.

With the carbonate immobilization device, carbon dioxide can be efficiently immobilized with less energy (pressure).

In addition, as the aspect of the carbonate immobilization device of the present invention, a membrane having a sodium chloride blocking rate of 95.0% or less is used.

With the carbonate immobilization device, carbon dioxide can be efficiently immobilized with less energy (pressure).

In addition, according to another aspect of the present invention, there is provided a carbonate immobilization method including a carbonate generation process of generating an alkaline-earth metal carbonate by concentrating treatment target water containing an alkaline-earth metal ion using a membrane having a magnesium chloride blocking rate of 1.0% or more and 99.0% or less.

With the carbonate immobilization method of the present invention, concentration using the semipermeable membrane is performed. From this, there is an effect in which the treatment target water can be concentrated with less energy compared to a case where the treatment target water is heated and evaporated to be concentrated, and carbon dioxide can be immobilized as the carbonate.

In addition, by using the membrane having the magnesium chloride blocking rate of 1.0% or more and 99.0% or less, a part of the alkaline-earth metal carbonate generated when the treatment target water is concentrated passes through the membrane. From this, a decrease in a treatment target water treatment performance caused by adhesion of the carbonate, which is called scale, to a surface of the membrane can be suppressed, and carbon dioxide can be efficiently immobilized.

### Advantageous Effects of Invention

According to the present invention, the carbonate immobilization device and the carbonate immobilization method that suppress a decrease in a treatment target water treatment performance by suppressing adhesion of an alkaline-earth metal carbonate as scale to the surface of the membrane can be provided as a carbonate immobilization device and a carbonate immobilization method that immobilize carbon dioxide using membrane filtration.

### Brief Description of Drawings

FIG. 1 is a schematic explanatory diagram showing an example of an aspect of a carbonate immobilization device according to a first embodiment of the present invention.
FIG. 2 is a schematic explanatory diagram showing another example of an aspect of a carbonate immobilization device according to a second embodiment of the present invention.
FIG. 3A is a schematic explanatory diagram showing an example as a ship including a carbonate immobilization device is viewed from a bow of the ship according to a third embodiment of the present invention. FIG. 3B is a schematic explanatory diagram showing an example of the ship including the carbonate immobilization device as the ship is viewed from a side.
FIG. 4 is a schematic explanatory diagram showing a ratio of presence of a carbonic acid substance with a change in pH in fresh water in the present invention.
FIG. 5 is a schematic explanatory diagram showing a difference in a ratio of presence of a carbonic acid substance with a change in pH in fresh water and sea water in the present invention.

### Description of Embodiments

The present invention uses a semipermeable membrane that is less likely to allow a part of alkaline-earth metal ions to permeate. By concentrating treatment target water containing carbon dioxide and alkaline-earth metal ions dissolved in the treatment target water with the semipermeable membrane, water molecules are allowed to permeate to decrease, while a concentration of the alkaline-earth metal ions (particularly, calcium ions) and a carbonate ion concentration are risen. Accordingly, the alkaline-earth metal ions and carbonate ions react with each other to generate an alkaline-earth metal carbonate, thereby immobilizing carbon dioxide.

Further, in a case where treatment target water having a pH exceeding 7 is concentrated by the semipermeable membrane, a concentrated liquid concentrated by the semipermeable membrane has a decreased number of water molecules and a risen concentration of hydroxide ions. Accordingly, the pH of the concentrated liquid rises, so that there is an effect of easily generating the carbonate ions and more easily generating the alkaline-earth metal carbonate.

Herein, a case where the pH of the concentrated liquid rises, so that the carbonate ions are easily generated will be described. In carbonated water in which carbon dioxide is dissolved, a chemical equilibrium expression shown in expression 1 is generally established.

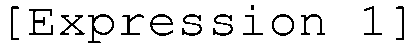

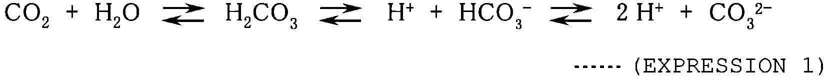

As shown in expression 1, in the carbonated water, a part of carbonic acid (H₂CO₃) is ionized into hydrogen ions (H⁺) and bicarbonate ions (HCO₃-). Then, the hydrogen ions are further ionized from the bicarbonate ions, and thus carbonate ions (CO₃²⁻) are generated.

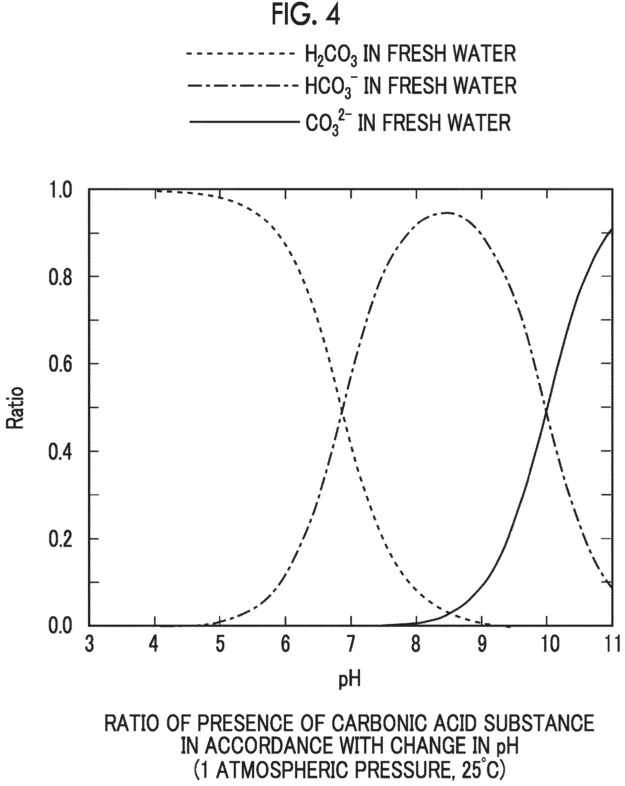

Herein, it is known that in order to cause a state where a ratio of the presence of carbonate ions (CO₃²⁻) from the carbonic acid (H₂CO₃) or the bicarbonate ions (HCO₃⁻) in a liquid obtained by dissolving carbon dioxide in pure water (carbonated water) is high, as shown in FIG. 4, the ratio of the presence of the carbonate ions (CO₃²⁻) in the carbonated water can be risen by raising the pH.

Therefore, with the use of the above phenomenon, in particular, by concentrating the treatment target water having a pH exceeding 7 with the semipermeable membrane, the pH can be risen, and by increasing the ratio of the presence of the carbonate ions (CO₃²⁻), an alkaline-earth metal carbonate can be more efficiently generated.

There is an effect in which by using the semipermeable membrane as described above and concentrating the treatment target water, the treatment target water can be concentrated with less energy and a carbonate can be obtained, compared to a case where treatment target water such as the sea water of the related art is evaporated (a method called a single distillation method or the like) and concentrated.

To describe specifically, in a case where moisture in the sea water, which is the treatment target water, is evaporated to be concentrated to obtain a carbonate, energy for evaporating the moisture is approximately 626 kWh/m³, while energy for producing pure water from the sea water using the semipermeable membrane is approximately 0.69 kWh/m³.

In the present invention, a semipermeable membrane that has a magnesium chloride blocking rate of 1.0% to 99.0% and a sodium chloride blocking rate of 95.0% or less (an NF membrane or the like) is used instead of a semipermeable membrane that is used in general to produce fresh water from sea water, and treatment target water containing alkaline-earth metal ions is concentrated to generate an alkaline-earth metal carbonate.

In the semipermeable membrane used when producing the fresh water from the sea water, it is required to prevent sodium ions or alkaline-earth metal ions from permeating as much as possible so that the permeated liquid that has permeated a reverse osmosis membrane does not contain sodium chloride or the like. However, in a case where the fresh water is generated from the sea water using the semipermeable membrane that satisfies the requirement, a carbonate (a calcium carbonate, a magnesium carbonate, or the like) or a sulfate (a calcium sulfate, a magnesium sulfate, or the like) of an alkaline-earth metal contained in the sea water adheres to a surface of the reverse osmosis membrane (scale), and the processing capacity of the treatment target water is in a gradually lowered state. For this reason, in a device using the reverse osmosis membrane that generates fresh water from sea water, it is required to suppress generation of scale.

On the other hand, in the present invention, the semipermeable membrane through which a part of dissolved sodium chloride or the like passes is used. In this manner, concentration can be performed at a lower pressure than in a case where a reverse osmosis membrane is used in a case of producing fresh water from sea water. Further, by using the membrane of the present invention, a part of a fine carbonate generated during the concentration passes through the semipermeable membrane. Accordingly, a part of the carbonate generated by the concentration (microcrystalline carbonates) can be moved to a permeated liquid side. From this, it is possible to provide a carbonate immobilization device and a carbonate immobilization method that can efficiently immobilize carbon dioxide as a carbonate while suppressing incapability of a part of the carbonate being exhausted to the permeated liquid side and incapability of treatment of the semipermeable membrane due to scale.

It is preferable to introduce treatment target water having a salt concentration on a concentration side and to introduce a liquid having a salt concentration on a permeate side. In addition, the salt concentration of a liquid on the permeate side is more preferably the same as the salt concentration of the treatment target water on the concentration side. Further, the salt concentration of the liquid on the permeate side is more preferably higher than the salt concentration of the treatment target water on the concentration side.

By having the salt concentration of the liquid on the permeate side, a concentration difference between the salt concentration of the treatment target water on the concentration side and the salt concentration of the liquid on the permeate side becomes small, and the treatment target water can be concentrated with less energy, and carbon dioxide can be immobilized. In addition, by making a salt concentration of a liquid on a dilution side higher than the salt concentration of the treatment target water on the concentration side, osmotic pressure (positive osmosis) may be generated to concentrate the treatment target water on the concentration side with less energy.

Hereinafter, embodiments of a carbonate immobilization device according to the present invention will be described in detail. In addition, description of the carbonate immobilization method according to the present invention will be replaced with description of an operation of the carbonate immobilization device according to the present invention.

A carbonate immobilization device and a carbonate immobilization method described in the embodiments are merely examples for describing the carbonate immobilization device and the carbonate immobilization method according to the present invention and are not limited thereto.

### [First Embodiment]

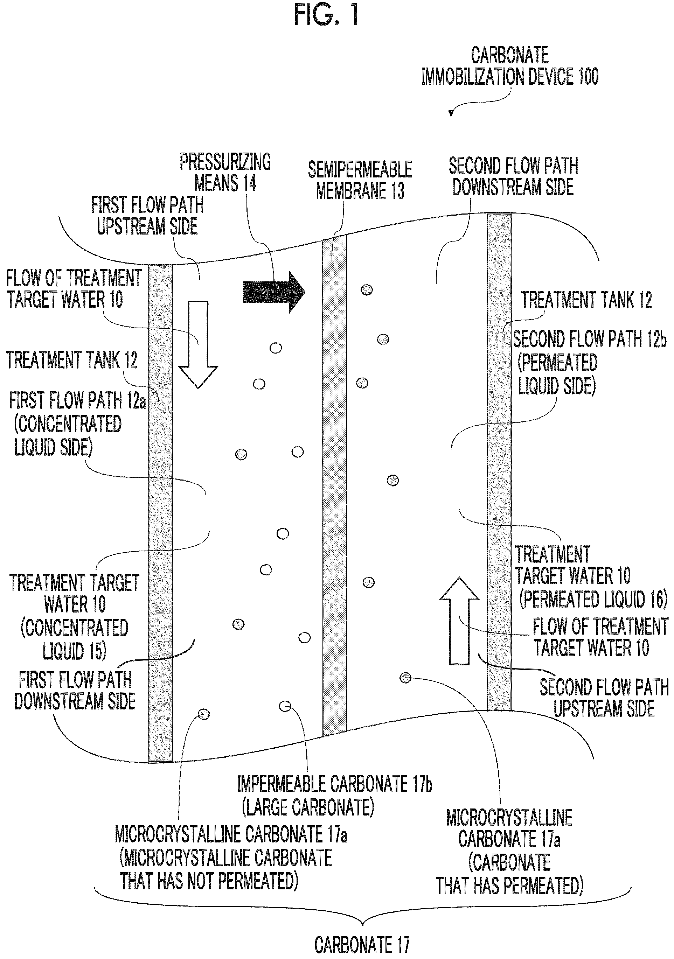

A first embodiment of the present invention will be described with reference to FIG. **1****.** A carbonate immobilization device 100 according to the first embodiment of the present invention includes a semipermeable membrane 13, and the semipermeable membrane 13 immobilizes carbon dioxide as a carbonate by concentrating treatment target water 10.

### [Treatment Target Water]

The treatment target water 10 is not particularly limited insofar as the treatment target water 10 is an aqueous solution containing carbon dioxide and alkaline-earth metal ions and an aqueous solution in which when concentrated by the semipermeable membrane 13, an ion concentration of alkaline-earth metals (particularly calcium ions) rises and a carbonate thereof is likely to be generated.

The preferable treatment target water 10 that can be used in the present embodiment is not particularly limited in terms of an origin thereof insofar as the treatment target water 10 is an aqueous solution in which carbon dioxide and alkaline-earth metal ions are present. As the preferable treatment target water 10, an aqueous solution in which carbon dioxide is artificially dissolved or a substance that artificially becomes an alkaline-earth metal ion is dissolved or an aqueous solution in which carbon dioxide and an alkaline-earth metal ion are dissolved from the beginning may be used. Examples thereof include sea water, river water, tap water, pure water, drainage water or waste water from a factory, leachate from a landfill site, and the like.

In addition, the treatment target water 10 is an aqueous solution containing carbon dioxide and alkaline-earth metal ions, and an aqueous solution having a pH exceeding 7.0 is preferably used. The pH of the treatment target water 10 is preferably a pH of 7.5 or higher and more preferably a pH of 8.0 or higher.

In a case where the pH of the treatment target water 10 exceeds 7, when the treatment target water 10 is concentrated, the number of water molecules decreases by permeating the semipermeable membrane 13, while hydroxide ions do not permeate the semipermeable membrane 13 and the concentration of the hydroxide ions rises. From this, the concentrated treatment target water 10 has an effect of increasing the pH and easily generating carbonate ions.

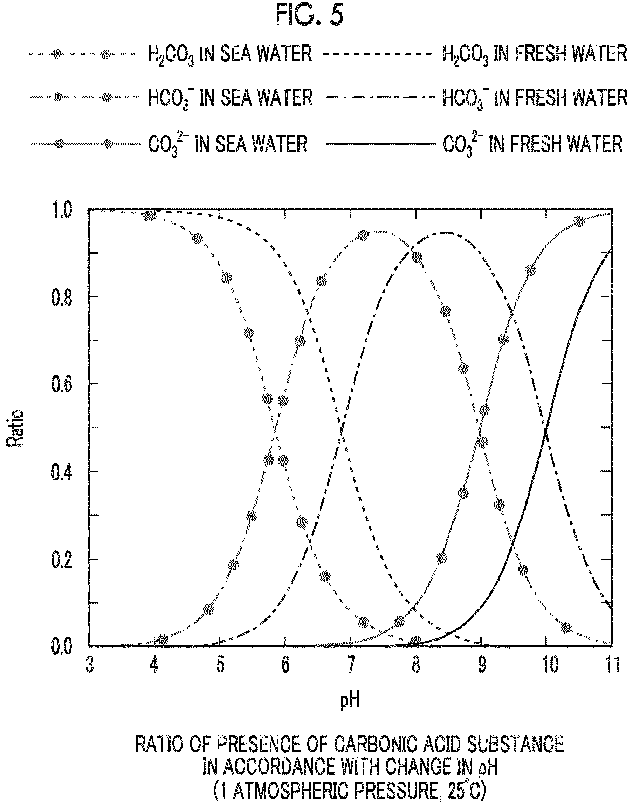

Further, it is preferable that the treatment target water 10 contains a large amount of calcium ions (as a main component) as alkaline-earth metal ions and may be an aqueous solution containing other salts excluding carbonate ion salts and alkaline-earth metal ion salts. As the treatment target water 10 containing other salts, sea water can be exemplified. FIG. 5 is a diagram showing a ratio of the presence of a carbonic acid substance with a change in pH in sea water and pure water that does not contain other salts.

It is found that carbonate ions in the sea water start to be generated at a pH of approximately 6.5, while carbonate ions in the pure water not containing other salts start to be generated at a pH of approximately 8.

That is, in a case where the pH of the aqueous solution containing other salts and the pH of the aqueous solution not containing other salts are the same, the aqueous solution containing other salts is in a state where a larger amount of carbonate ions is easily generated. From this, in a case where the treatment target water 10 contains other salts, there is an effect in which the carbonate ions can be efficiently generated without increasing the pH.

The pH at which the carbonate ions start to be generated tends to be a lower pH as the content of other salts increases.

From the above viewpoint, the treatment target water 10 can be exemplified as an aqueous solution in which sea water containing sufficient alkaline-earth metal ions and having a pH of 8.0 or higher is suitable.

### [Treatment Tank]

A treatment tank 12 may secure a flow path in which the treatment target water 10 flows, and in particular, a material, a shape, and a size of the treatment tank 12 are not limited. The treatment tank 12 is divided into a first flow path 12a and a second flow path 12b to be separated by the semipermeable membrane 13 (to be described later). In addition, the treatment target water 10 is supplied to each of the first flow path 12a and the second flow path 12b. In addition, in the present embodiment, the treatment target water 10 in the first flow path 12a and the treatment target water 10 in the second flow path 12b are in a state of not being mixed with each other.

### [Semipermeable Membrane]

The semipermeable membrane 13 is a membrane through which a part (microcrystalline carbonate 17a) of an alkaline-earth metal carbonate 17 generated when water molecules of the treatment target water 10 are permeated and the treatment target water 10 is concentrated passes to a permeated liquid side and which retains (does not pass to the permeated liquid side) an impermeable carbonate 17b that is larger than the microcrystalline carbonate 17a and that does not permeate the semipermeable membrane on a concentrated liquid side.

In addition, in order to generate the alkaline-earth metal carbonate 17, it is necessary that alkaline-earth metal ions are present on the concentrated liquid side. From this, the semipermeable membrane 13 is preferably a membrane through which a hydrated part of the alkaline-earth metal ions passes to the permeated liquid side and which retains (does not pass to the permeated liquid side) the remaining hydrated part of the alkaline-earth metal ions on the concentration side. It is preferable that the semipermeable membrane 13 is such that the concentration of the alkaline-earth metal ions on the concentrated liquid side is higher than the concentration of the alkaline-earth metal ions on the permeated liquid side when the treatment target water 10 is concentrated. In this manner, while the alkaline-earth metal carbonate 17 is efficiently generated on the concentrated liquid side, a part of the alkaline-earth metal carbonate (microcrystalline carbonate 17a) can be exhausted to the permeated liquid side, and carbonation can be performed while suppressing that the concentration cannot be performed due to scale.

The size of the diameter of a hole provided in the semipermeable membrane 13 is preferably smaller than a size that exceeds the size of the diameter of one molecule of the alkaline-earth metal carbonate and that the alkaline-earth metal carbonate cannot pass in a state where two molecules of the alkaline-earth metal carbonate are lined up (twice the diameter of one molecule of the alkaline-earth metal carbonate).

In a case of being equal to or smaller than the diameter of one molecule of the alkaline-earth metal carbonate, there is a possibility in which the carbonate is less likely to be exhausted to the permeated liquid side, and when the diameter of the hole provided in the semipermeable membrane 13 is excessively large, the hydrated alkaline-earth metal ions are also likely to pass through. From this, there is a possibility in which efficiency of generating the alkaline-earth metal carbonate 17 may be lowered on the concentrated liquid side.

The concentration of the treatment target water 10 is performed by applying a pressure. From this, the size of the diameter of the hole provided in the membrane may be equal to or smaller than a diameter of one molecule of the alkaline-earth metal carbonate or may be the size of the diameter that is obtained by expanding the hole of the membrane with the pressure and that allows passing therethrough.

As a specific size of the diameter of the hole provided in the semipermeable membrane 13, a membrane having a thickness of 0.2 nm or more and 5.0 nm or less can be applied.

A lower limit value of the diameter of the hole provided in the semipermeable membrane 13 is preferably 0.3 nm or more, more preferably 0.4 nm or more, and still more preferably 0.5 nm or more.

In addition, an upper limit value of the diameter of the hole provided in the semipermeable membrane 13 is preferably 4 nm or less, more preferably 3 nm or less, and still more preferably 2 nm or less.

In addition, as the semipermeable membrane 13 that can be used in the present embodiment, a membrane through which a large amount of monovalent ions (alkali metal ions such as sodium ions or potassium ions) are permeated and through which divalent ions (alkaline-earth metal ions such as calcium ions and magnesium ions) are less likely to permeate is preferable. As a specific example of the semipermeable membrane 13, a membrane having a magnesium chloride blocking rate, which is used as an indicator of a blocking rate of divalent ions containing an alkaline-earth metal, of 1.0% or more and 99.0% or less, more preferably, a membrane having a magnesium chloride blocking rate of 1.0% or more and 99.0% or less and a sodium chloride blocking rate of 95.0% or less can be used.

As a lower limit value of the magnesium chloride blocking rate, the blocking rate is preferably 10% or more, more preferably 30% or more, still more preferably 50% or more, and still more preferably 60% or more.

In addition, an upper limit value of the magnesium chloride blocking rate is preferably 95% or less, more preferably 90% or less, still more preferably 80% or more, and still more preferably 70% or less.

In a case where the magnesium chloride blocking rate is smaller than the lower limit value, the concentration of the alkaline-earth metal ions on the concentrated liquid side becomes excessively small, so that a carbonate is less likely to be generated, and there is a possibility in which efficiency of immobilizing carbon dioxide is lowered. In addition, in a case where the magnesium chloride blocking rate is larger than the upper limit value, magnesium ions are less likely to permeate the semipermeable membrane 13. From this, a certain pressure is required for the concentration, and energy required for generating the carbonate increases.

In addition, as a lower limit value of the sodium chloride blocking rate, the blocking rate is preferably 10% or more, more preferably 30% or more, still more preferably 50% or more, and still more preferably 60% or more.

In addition, an upper limit value of the sodium chloride blocking rate is preferably 90% or less, more preferably 85% or less, still more preferably 80% or more, and still more preferably 70% or less.

In a case where the sodium chloride blocking rate is larger than the upper limit value, a pressure at which sodium ions are permeated to the permeated liquid side is required, and a large amount of energy for applying the pressure is required.

The magnesium chloride blocking rate and the sodium chloride blocking rate of the semipermeable membrane 13 are numerical values obtained by dividing the amount of sodium chloride and the amount of magnesium chloride remaining on the concentrated liquid side after concentration is performed by applying a pressure from a state before the concentration (before applying the pressure) in a case where a 0.15% to 0.20% by weight sodium chloride solution and a 0.15% to 0.20% by weight magnesium chloride solution are used as the treatment target water and concentrated under a pressure of 1.0 to 1.5 MPa.

Table 1 shows measurement results in the case of NTR-7410, NTR-7450, NTR-7250, NTR-729HF, and NTR-729HR manufactured by Nitto Denko Corporation as the semipermeable membrane 13.

**[Table 1]**

| Permeation Blocking Rate of Solute of Semipermeable Membrane | | | | | |
|---|---|---|---|---|---|
| Solute | Semipermeable membrane | | | | |
| | NTR-7410 | NTR-7450 | NTR-7250 | NTR-729HF | NTR-729HR |
| NaCl | 15 | 51 | 60 | 92 | 99.5 |
| MgCl₂ | 4 | 13 | 90 | 90 | 99.8 |

In NTR-729HR, many monovalent ions and divalent ions are blocked, and thus, a high pressure is required. In addition, there is a possibility in which scale easily adheres to the membrane.

On the other hand, in the case of NTR-729HF, 10% of the divalent ions are permeated, and thus, carbonates are likely to be generated on the concentrated liquid side, and a certain amount of carbonates are exhausted to the permeated liquid side, which is preferable.

In addition, in the case of NTR-7250, 10% of the divalent ions are permeated, and 40% of the monovalent ions are also permeated. From this, concentration is easily performed at a low pressure, and carbonation can be efficiently performed, which is preferable.

The inventor of the present invention has performed a test of using sea water as the treatment target water 10 and using NTR-7250 as the semipermeable membrane 13 to perform concentration. As a result, it is confirmed that a total of a calcium ion concentration of the concentrated liquid concentrated by applying a pressure and a calcium ion concentration of the permeated liquid is less than a total amount of calcium ions of the treatment target water 10 before applying the pressure. From the above, it is estimated that the alkaline-earth metal carbonate 17 is generated by using a membrane called an NF membrane, and a part thereof permeates the membrane as the microcrystalline carbonate 17a and moves to the permeated liquid side.

### [Pressurizing Means]

Pressurizing means 14 is not particularly limited insofar as the pressurizing means 14 is means for pressurizing the treatment target water 10 in the semipermeable membrane 23. As the pressurizing means 14, means for providing a water flow to the treatment target water 10 can be exemplified. The treatment target water 10 to which the water flow is provided is supplied to the first flow path 12a to collide with the semipermeable membrane 23, thereby the treatment target water 10 is pressurized in the semipermeable membrane 23. Specifically, a method in which a pump or waves of the ocean that give a water flow to the treatment target water 10 cause the treatment target water 10 to collide with (pressurize) the semipermeable membrane 13, or the carbonate immobilization device 100 is attached to a ship, and the treatment target water 10 such as sea water collides with the semipermeable membrane 13 with a propulsion force of the ship to pressurize the treatment target water 10 can be used.

The pressurizing means 14 pressurizes the treatment target water 10 in the semipermeable membrane 13, so that water molecules infiltrate from the first flow path 12a into the second flow path 12b, the treatment target water 10 in the first flow path 12a is concentrated, and the carbonate 17 is generated. The treatment target water 10 in the first flow path 12a becomes a concentrated liquid 15, and the treatment target water 10 in the second flow path 12b becomes a permeated liquid 16.

### [Operation of Carbonate Immobilization Device]

An operation of the carbonate immobilization device 100 will be described with reference to FIG. 1. In the following description, a case where the treatment target water 10 (sea water) containing calcium ions, magnesium ions, and sodium ions is used, and NTR-7250 manufactured by Nitto Denko Corporation is used as the semipermeable membrane 13 will be described.

First, as shown in FIG. 1, the treatment target water 10 is supplied to the first flow path 12a (concentrated liquid side) and is supplied to flow to the semipermeable membrane 13 such that a pressure is applied thereto by the pressurizing means 14 (in the case of FIG. 1, from an upper side toward a lower side).

In addition, the treatment target water 10 is supplied to the second flow path 12b on the permeated liquid side. In this case, the treatment target water 10 on the permeated liquid side is supplied to flow to a side opposite to the concentrated liquid side (in the case of FIG. 1, from the lower side toward the upper side). A flow of the treatment target water 10 on the permeated liquid side has a flow rate that does not apply a pressure to the semipermeable membrane 13 or a pressure lower than a pressure on the concentrated liquid side.

By setting the above operation status, the treatment target water 10 on the concentrated liquid side is concentrated, and the alkaline-earth metal carbonate 17 is generated. The process is a carbonate generation process of concentrating the treatment target water containing alkaline-earth metal ions using a membrane having a magnesium chloride blocking rate of 1.0% or more and 99.0% or less and a sodium chloride blocking rate of 95.0% or less to generate an alkaline-earth metal carbonate.

A part (microcrystalline carbonate 17a) of the generated alkaline-earth metal carbonate 17 moves to the permeated liquid side, and a remaining part (a remaining carbonate containing the microcrystalline carbonate 17a that does not move to the permeate side) is in a state of remaining on the concentrated liquid side.

After that, the alkaline-earth metal carbonate 17 flows to a downstream side or adheres to a surface of the semipermeable membrane 13 through a flow of the treatment target water 10 (concentrated liquid 15) in the first flow path 12a. In addition, the alkaline-earth metal carbonate 17 is exhausted through a flow of the treatment target water 10 (permeated liquid 16) in the second flow path 12b.

### [Second Embodiment]

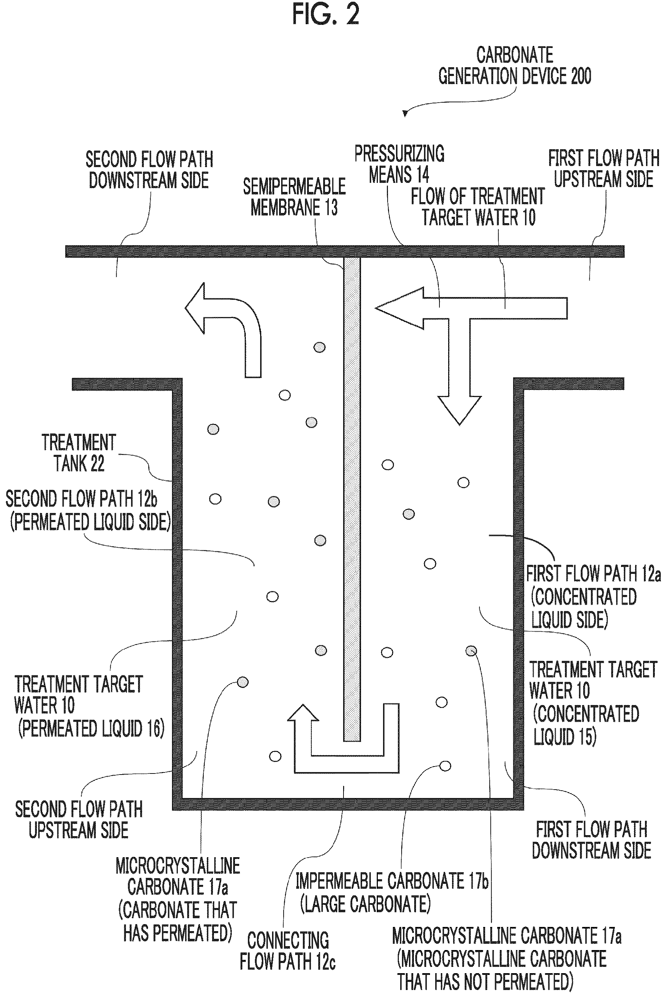

A second embodiment of the present invention will be described with reference to FIG. 2. A carbonate immobilization device 200 according to the second embodiment of the present invention is the carbonate immobilization device 200 including the first flow path 12a and the second flow path 12b partitioned via the semipermeable membrane 13, in which the first flow path 12a and the second flow path 12b are connected such that the treatment target water 10 passes through the first flow path 12a and then passes through the second flow path 12b, and the treatment target water 10 in the first flow path 12a is concentrated.

In the second embodiment of the present invention, the same functions and structures as those of the carbonate immobilization device 100 of the first embodiment are denoted by the same reference signs, and description thereof will be omitted.

### [Treatment Tank]

A treatment tank 22 may be capable of storing the treatment target water 10, and in particular, a material, a shape, and a size of the treatment tank 22 are not limited. The treatment tank 22 is divided into the first flow path 12a and the second flow path 12b to be separated by the semipermeable membrane 13. In addition, a connecting flow path 12c that connects the first flow path 12a and the second flow path 12b is present in the treatment tank 22. The first flow path 12a, the connecting flow path 12c, and the second flow path 12b are connected, and the treatment target water 10 flows in order of passing through the connecting flow path 12c and passing through the second flow path 12b after passing through the first flow path 12a. The first flow path 12a, the second flow path 12b, and the connecting flow path 12c are collectively referred to as a flow path.

### [Semipermeable Membrane]

The semipermeable membrane 13 is disposed to partition the first flow path 12a and the second flow path 12b. As the treatment target water 10 flows from the upstream side of the first flow path 12a toward the downstream side of the first flow path 12a, water molecules of the treatment target water 10 in the first flow path 12a infiltrate into the side of the second flow path 12b, and concentration is performed. The downstream side of the first flow path 12a becomes a concentrated liquid 25. In addition, the treatment target water 10 flowing in the second flow path 12b becomes a permeated liquid 26.

### [Operation of Carbonate Immobilization Device]

Next, an operation of the carbonate immobilization device 200 will be described with reference to FIG. 2.

First, the treatment target water 10 is supplied to the first flow path 12a and the second flow path 12b. The treatment target water 10 is in a state of being continuously supplied to the flow path. In addition, when the treatment target water 10 is supplied to the first flow path 12a, the treatment target water 10 is supplied to collide with the semipermeable membrane 13 by the pressurizing means 14.

Next, the treatment target water 10 on the upstream side of the first flow path 12a is pressurized in the semipermeable membrane 13, so that the treatment target water 10 is concentrated. In this case, the carbonate 17 is generated, a part thereof (microcrystalline carbonate 17a) passes through the semipermeable membrane 13, the permeated liquid 16 infiltrates and moves to the downstream side of the second flow path 12b together with a part of the carbonate, and a part of the carbonate is exhausted together with the permeated liquid 16.

In addition, a remaining part of the carbonate that has not permeated (the remaining carbonate containing the microcrystalline carbonate 17a that has not permeated) is a state of remaining in the first flow path 12a, and flows to the downstream side or adheres to the semipermeable membrane 13.

After that, the concentrated liquid 15 flows into the second flow path 12b to be extruded by passing through the connecting flow path 12c. The concentrated liquid 15 is supplied to the second flow path 12b to be extruded. From this, a remaining part of the carbonate 17 that has not permeated the semipermeable membrane 13 (the remaining carbonate containing the microcrystalline carbonate 17a that has not permeated to the permeate side) is supplied from the upstream side of the second flow path 12b and flows to the downstream side, and the remaining carbonate 17 is exhausted.

In the present embodiment, the concentrated liquid 15 and the permeated liquid 16 are in a state of being mixed with each other in the second flow path 12b. From this, the microcrystalline carbonate 17a and the unpermeated carbonate 17b are exhausted from the carbonate immobilization device 200 in a mixed state.

As described above, a large amount of the generated carbonate 17 is exhausted to the outside of the carbonate immobilization device 200 through a flow of the treatment target water 10, and carbon dioxide is continuously immobilized by the carbonate generation.

### [Third Embodiment]

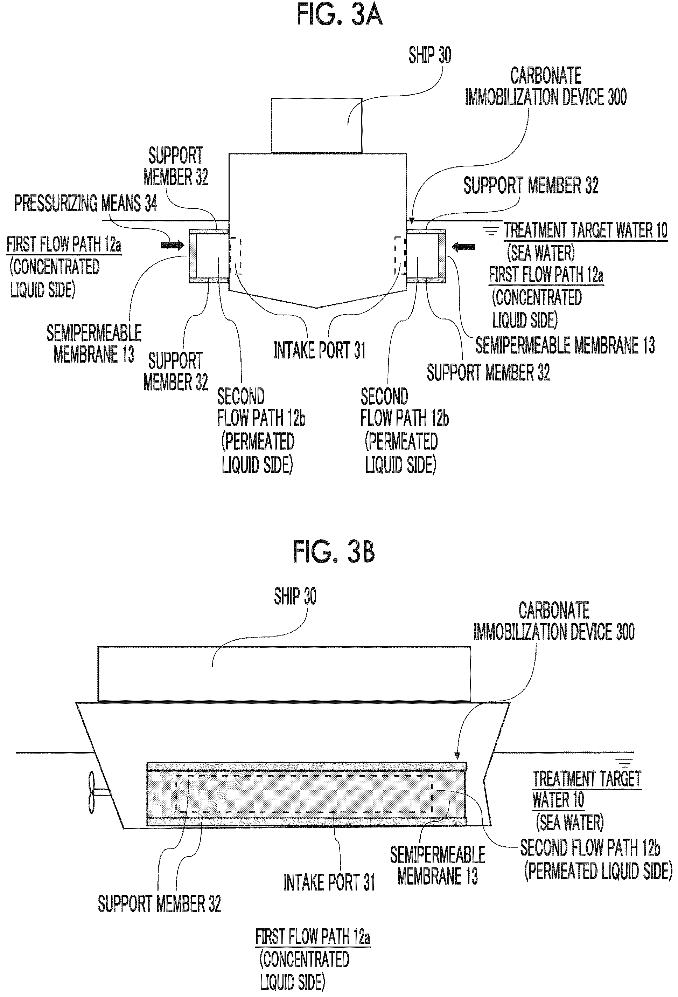

An embodiment 3 of the present invention will be described with reference to FIGS. 3A and 3B. A carbonate immobilization device 300 according to a third embodiment of the present invention is attached to a ship 30.

Specifically, the semipermeable membrane 13 is attached to a vicinity of an intake port 31 for ballast water to be positioned below the draft of the ship 30.

In the third embodiment of the present invention, the same functions and structures as those of the carbonate immobilization device 100 of the first embodiment and the carbonate immobilization device 200 of the second embodiment are denoted by the same reference signs, and description thereof will be omitted.

### [Support Member]

A support member 32 is a member that plays a role of holding the semipermeable membrane 13 at a position away from the intake port 31 for ballast water of the ship 30.

A material for the support member is not particularly limited insofar as the support member has a structure capable of withstanding the pressure of a water flow when the ballast water is taken and a water flow when the ballast water is exhausted and of continuously holding the position of the semipermeable membrane 13.

### [Operation of Carbonate Immobilization Device]

An operation of the carbonate immobilization device 300 will be described.

In a case where the ship 30 takes sea water (treatment target water 10) as ballast water, a water flow is generated toward a ballast tank (not shown). In the present embodiment, the water flow corresponds to pressurizing means 34.

Therefore, a space surrounded by the ship 30, the semipermeable membrane 13, and the support member 32 corresponds to the second flow path 12b, and an ocean side corresponds to the first flow path 12a. Accordingly, when the ballast water is taken, the sea water around the ship 30 is supplied in a state of being pressurized in the semipermeable membrane 13, so that the sea water (treatment target water 10) is concentrated, and the carbonate 17 is generated. A part of the generated carbonate (microcrystalline carbonate 17a) is incorporated into the ballast tank as the permeated liquid 16, and the remaining carbonate (carbonate containing the microcrystalline carbonate 17a that has not moved to the permeate side) is released into the ocean as the concentrated liquid 15, so that carbon dioxide is immobilized.

In addition, by exhausting the ballast water of the ballast tank, the permeated liquid 16 containing the microcrystalline carbonate 17a is released into the ocean, and the carbon dioxide is immobilized while suppressing adhesion of the carbonate to the semipermeable membrane 13.

A case where the semipermeable membrane 13 is disposed in the vicinity of the intake port 31 for the ballast water and the ballast water is incorporated has been exemplified in the present embodiment. However, the semipermeable membrane 13 may be disposed around the ship 30 such that the semipermeable membrane 13 intersects a traveling direction of the ship 30. In this case, sea water collides with the semipermeable membrane 13 by using a propulsion force when the ship 30 moves forward or backward. Accordingly, the sea water is supplied in a state where a pressure is applied to the semipermeable membrane 13, and carbon dioxide can be immobilized.

### Industrial Applicability

The carbonate immobilization device and a carbonate immobilization method of the present invention can be used in generating a carbonate with less energy than concentration caused by heating and evaporating from a solution containing alkaline-earth metal ions. Further, the NF membrane can be suitably used in immobilizing the amount of carbon dioxide in the atmosphere while suppressing a decrease in a treatment target water treatment performance caused by adhesion of the carbonate which is called scale, to the surface of the membrane.

### Reference Signs List

- 100, 200, 300: Carbonate immobilization device
- 10: Treatment target water
- 11: Missing number
- 12: Treatment tank
- 12a: First flow path
- 12b: Second flow path
- 13: Semipermeable membrane
- 14: Pressurizing means
- 15: Concentrated liquid
- 16: Permeated liquid
- 17: Carbonate
- 18 to 29: Missing number
- 30: Ship
- 31: Intake port
- 32: Support member
- 33: Missing number
- 34: Pressurizing means.

## Claims

1. A carbonate immobilization device that generates an alkaline-earth metal carbonate by concentrating treatment target water containing an alkaline-earth metal ion using a membrane having a magnesium chloride blocking rate of 1.0% or more and 99.0% or less.

2. The carbonate immobilization device according to claim 1,
wherein the membrane has a sodium chloride blocking rate of 1.0% to 99.0%, and the treatment target water contains a sodium ion.

3. The carbonate immobilization device according to claim 1 or 2,
wherein a membrane having a magnesium chloride blocking rate of 95.0% or less is used.

4. The carbonate immobilization device according to claim 2 or 3,
wherein a membrane having a sodium chloride blocking rate of 95.0% or less is used.

5. A carbonate immobilization method comprising:
a carbonate generation process of generating an alkaline-earth metal carbonate by concentrating treatment target water containing an alkaline-earth metal ion using a membrane having a magnesium chloride blocking rate of 1.0% or more and 99.0% or less.
